# FASCICULE DE BREVET EUROPEEN

(11) **EP 1 205 109 B1**
(45) Date de publication et mention de la délivrance du brevet: **17.03.2004**
(21) Numéro de dépôt: 01402682.7
(22) Date de dépôt: 17.10.2001
(51) Int. Cl.: A22B 5/00

(54) **Installation de marquage à deux têtes d'impression et procédé de marquage**
Markierungseinrichtung mit zwei Druckköpfen und Markierungsverfahren
Marking device with two printing heads and method for marking

(30) Priorité: 13.11.2000 FR 0014543
(43) Date de publication de la demande: 15.05.2002
(73) Titulaire: DURAND INTERNATIONAL, 07210 Baix Chomerac (FR)
(72) Inventeur: Torrelli, Didier, 07500 Guilherand Granges (FR)
(74) Mandataire: Geismar, Thierry

(56) Documents cités:
- EP-A- 0 273 371
- EP-A- 0 398 338
- DE-A- 3 018 397
- FR-A- 2 620 596
- FR-A- 2 705 014

## Description

L'invention est relative au domaine du marquage d'animaux de boucheries abattus, notamment des porcins et des bovins, voir p.e. le document EP-A-398 338.

L'invention concerne une installation et un procédé de marquage destiné à marquer sur la face externe des carcasses des informations concernant celles-ci.

Plus particulièrement, le marquage concerne des informations spécifiques, désignées par la suite « informations carcasse ».

On recherche de plus en plus, pour les revendeurs et le consommateur final, une meilleure traçabilité des carcasses : date de l'abattage, numéro d'indentification de la carcasse, informations sur la qualité du produit, l'éleveur d'origine .... De telles informations peuvent être collectées au début du processus d'abattage.

On recherche tout particulièrement l'indication sur la carcasse de données de mesure prises lors de l'abattage avant le marquage, en particulier le résultat de la mesure du rapport gras/maigre déterminant pour la classification de la carcasse pour la pesée fiscale qui conditionne le prix de la carcasse au Kg pour l'éleveur.

En outre, le marquage doit pouvoir être effectué sur différentes zones de la carcasse, à savoir typiquement les jambons, la longe, la poitrine, les épaules. Ce marquage doit être efficace sur des carcasses typiquement éviscérées et séparées en deux demi carcasses avant le marquage.

On recherche de plus un tel marquage dans des procédés d'abattage dont la fréquence peut être très élevée, par exemple de l'ordre de 500 à 700 porcs/heure.

On connaît déjà des procédés de marquage de carcasses abattues.

On connaît en effet des procédés et dispositifs de marquage de salubrité, par exemple décrits dans le brevet EP 595 738. Les carcasses défilent et subissent un marquage bien spécifique, à savoir un marquage à chaud de cachets sanitaires. Ces cachets sanitaires comportent des données permanentes et inamovibles. Il s'agit en particulier du pays d'origine, du numéro d'agrément de l'abattoir, d'un signe CEE. Le marquage à chaud est effectué à l'aide de plusieurs estampilles, une estampille par zone de marquage.

On connaît également des installations de marquage pouvant être utilisées pour marquer des informations carcasses, faisant intervenir des têtes d'impression spécialisées appropriées utilisées par l'homme du métier. Les têtes d'impression sont destinées typiquement au marquage des deux demi carcasses. Voir p.e. le docunent DE-A-3 018 397.

Les installations connues utilisent plusieurs têtes d'impression situées à des positions différentes dans la direction verticale, une tête par position de marquage. Par exemple, pour chaque demi carcasse, l'installation comprend cinq têtes de marquage correspondant à : l'épaule, la longe (deux zones de marquage), la poitrine, le jambon. Le marquage des installations connues se fait soit à poste fixe (carcasses à l'arrêt lors du marquage), soit à poste mobile (carcasses en déplacement lors du marquage). Les carcasses sont généralement suspendues par les pattes arrière.

Dans certaines de ces installations, les têtes sont disposées sur un même chassis, ce chassis est amené en position d'application des têtes sur la carcasse, les têtes sont appliquées sur la carcasse puis le chassis revient en position escamotée après le marquage. Selon le nombre de zones de marquage souhaité, le nombre de têtes est ainsi ajusté, ce qui pose des problèmes d'encombrement et de coût d'une telle installation, le prix unitaire des têtes étant élevé.

Dans d'autres installations de ce type, pour une même carcasse marquée, le marquage se fait sur plusieurs endroits de la ligne d'abattage, par exemple un premier endroit pour les épaules et les flancs, et un second endroit pour les jambons et le milieu du dos.

D'autres installations connues limitent le nombre de têtes mais par là même également la possibilité de marquage en plusieurs endroits.

Par ailleurs le marquage pose également des problèmes du positionnement approprié des têtes de marquage par rapport à la zone marquée.

Or, la conformation des carcasses étant différente entre le côté ventral et le côté dorsal, comme cela sera décrit, le positionnement des têtes doit être bien contrôlé pour un marquage conforme, sans distorsion des caractères en particulier. Certaines installations à tête fixe par rapport au chassis de support sont ainsi amenées à prévoir un virage dans le chemin de convoyage en effectuant un marquage avant puis un marquage après le virage.

En outre, lors d'un processus en ligne, les carcasses défilant devant le poste de marquage n'ont pas toutes les mêmes conformations et les mêmes dimensions. L'utilisation de plusieurs têtes sans prendre en compte ces écarts de conformations et/ou de dimensions ni ajuster la position des têtes en conséquence, peut également entraîner un marquage de mauvaise qualité.

L'invention vise à pallier les inconvénients précités de l'art antérieur, en proposant une installation et un procédé de marquage de carcasses permettant d'assurer un marquage de qualité, à la fois précis et rapide, tout en évitant un coût élevé.

A cet effet, selon un premier objet l'invention concerne une installation pour marquer au moins une partie de la carcasse d'un animal abattu selon la revendication 1 comprenant des moyens pour convoyer les carcasses successives vers un poste de marquage, le poste de marquage comprenant pour chaque demi carcasse une tête unique de marquage supportée par des moyens permettant de déplacer ladite tête de marquage selon une direction verticale, selon une direction horizontale de défilement des carcasses et selon une direction horizontale transversale à la direction de défilement, de manière que ladite tête puisse atteindre les différentes zones à marquer sur la demi carcasse.

Chaque tête de marquage, affectée à une demi carcasse, est supportée par un chariot montée/baisse porté lui-même par un chariot entrée/sortie monté lui-même sur un chassis support monté lui-même sur un bâti fixe, l'installation comprenant des moyens d'entraînement du chassis support, du chariot entrée/sortie, du chariot montée/baisse, et des moyens support et de convoyage - plus spécialement de suspension verticale - de la carcasse à marquer, les moyens d'entraînement étant tels que chaque tête de marquage passe d'une position d'attente dite écartée, à au moins une position de marquage dite rapprochée.

Chaque tête de marquage fait partie d'un dispositif de marquage, monté sur le chariot montée baisse, et mobile verticalement par rapport au chariot entrée/sortie, de manière à pouvoir marquer plusieurs zones successives de la carcasse espacées situées sensiblement dans un même plan.

Selon un mode de réalisation, l'installation comprend des moyens pour amener chaque tête de marquage, dans un premier plan sensiblement vertical de marquage passant par la longe et le jambon, et un deuxième plan sensiblement vertical de marquage passant par l'épaule et la poitrine.

Selon une réalisation, chaque dispositif de marquage est agencé pour pouvoir se déplacer selon une course descendante dans le premier plan puis selon une course ascendante dans le second plan.

Chaque dispositif de marquage comprend des moyens de commande du positionnement, plus spécialement de pivotement, de la tête, de manière que la zone de marquage de ladite tête s'applique, sans distorsion du marquage, en regard de la surface de la carcasse dans la zone à marquer.

Selon une réalisation, les moyens de commande comprennent deux vérins actionnant le pivotement de la tête dont un est relié à la tête, tels que la tête de marquage soit orientée de façon appropriée contre la surface de la carcasse, dans une première position du côté dorsal, et dans une seconde position du côté ventral.

Selon une réalisation, les vérins sont adaptés pour agir comme un ressort lors du déplacement vertical des têtes de marquage par rapport à la carcasse, de manière à exercer un effort suffisamment élevé pour appliquer les têtes, et suffisamment faible pour suivre la conformation de la carcasse.

L'encombrement du dispositif de marquage dans la direction longitudinale de défilement est compris typiquement entre 200 et 600 mm.

En outre selon une réalisation l'installation comprend des moyens de contrôle de la vitesse de déplacement relatif de la tête de marquage et de la zone de marquage entre les impressions, en particulier un moteur pas à pas avec roue codeuse, ainsi que pendant l'impression.

L'installation est soit à poste mobile soit à poste fixe.

Les deux têtes sont écartées d'une distance préréglée ou réglable à l'aide de moyens de réglage de l'écartement dans un même plan horizontal et disposées sensiblement symétriquement l'une par rapport à l'autre par rapport à un plan vertical transversal de symétrie de la carcasse.

Selon un mode de réalisation l'installation comprend en amont du poste de marquage des moyens de mesure d'informations carcasse, spécifiques de la carcasse, du type numéro d'identification de la carcasse, date de l'abattage, poids, rapport gras/maigre, et des moyens de liaison informatiques entre les moyens de mesure et les têtes de marquage imprimant ces informations carcasse.

L'installation comprend selon une réalisation des moyens de programmation des positions de marquage en fonction des dimensions notamment la longueur - de la carcasse mesurées en amont du poste de marquage.

Selon une réalisation le chariot entrée/sortie comprend un plan libre de protection et ménage un espace suffisant pour comprendre des moyens de maintien de la carcasse lors du marquage.

Selon une réalisation , le marquage est prévu en tout point de la ligne d'abattage, lorsque l'abattoir prévoit une traçabilité complète. Selon une autre réalisation, lorsque le marquage est destiné essentiellement à imprimer un paramètre gras/maigre propre à chaque carcasse , le marquage est effectué à proximité du poste de pesée fiscale. Selon une réalisation, le marquage prévoit à la fois une traçabilité complète et le marquage du paramètre gras/maigre.

L'installation est agencée de manière que l'espace libre en position écartée soit suffisant pour permettre le marquage de porcs et de coches sur un même poste.

Selon un second aspect, l'invention concerne un procédé de marquage de carcasses d'animaux de boucherie selon la revendication 17, dans lequel on achemine les carcasses successives jusqu'à un poste de marquage disposé latéralement par rapport à la direction de défilement des carcasses, le procédé comprenant les étapes suivantes pour chaque demi carcasse à marquer :
- On amène la tête de marquage au niveau d'une première zone de marquage, et on l'applique de manière appropriée contre cette zone ;
- On actionne la tête de marquage en vue d'imprimer les informations souhaitées
- On réalise un déplacement relatif de la tête de marquage par rapport à la demi carcasse successivement d'une position de marquage à une autre, de manière à marquer la demi carcasse aux différentes positions souhaitées.

Selon une réalisation, on procède au marquage successivement dans un premier plan vertical de marquage passant part le jambon, la longe, puis par déplacement du chariot entrée/sortie de support des têtes d'impression, dans un second plan vertical de marquage passant par la poitrine et l'épaule.

Selon une réalisation on enregistre des informations carcasse spécifiques de la carcasse à marquer et les dimensions - notamment la longueur - de la carcasse préalablement au poste de marquage, puis on les transmet aux têtes de marquage pour le marquage de la carcasse correspondante.

On commande le marquage dans chaque zone de marquage lorsque la tête de marquage est appliquée de façon appropriée contre la surface de la carcasse dans la zone à marquer.

D'autres objets et avantages de l'invention apparaîtront au cours de la description qui va suivre de modes de réalisation, description faite en référence aux dessins annexés, dans lesquels :
- la figure 1 est une vue générale en perspective d'une installation pour le marquage de carcasses suspendues (moyens de suspension non représentés) d'animaux de boucherie illustrant le marquage d'une carcasse défilant devant un poste de marquage comprenant une tête de marquage par demi carcasse destinée à s'appliquer contre différentes zones de la carcasse en se déplaçant le long de la carcasse ;
- les figures 2 à 4 illustrent différentes étapes successives du procédé de marquage, selon des vues de côté : la figure 2 représente l'installation en position écartée, la figure 3 en première position rapprochée dite dans un premier plan de marquage, la figure 4 en seconde position rapprochée dans un second plan de marquage ; trois têtes de marquage sont représentées pour ces deux positions rapprochées pour une meilleures visibilité, mais il s'agit de la même tête dans trois positions possibles selon le plan de marquage vertical correspondant ;
- les figures 5,6 sont des vues de dessus, partielles et à plus grande échelle, selon un plan vertical et la ligne I-I des figures 3 et 4 respectivement;
- les figures 7 à 10 sont des vues partielles de dessus, carcasse non représentée, illustrant les différentes positions du dispositif de marquage permettant de contrôler l'orientation de la tête de marquage par rapport à la zone à marquer de la carcasse ;
- les figures 11 à 13 sont des vues schématiques en coupe de dessus illustrant la position des têtes de marquage lorsque l'on ne prévoit pas un écartement approprié entre les têtes de marquage, pour des animaux de dimensions différentes.

On décrit à présent l'invention selon un mode de réalisation pour un porc.

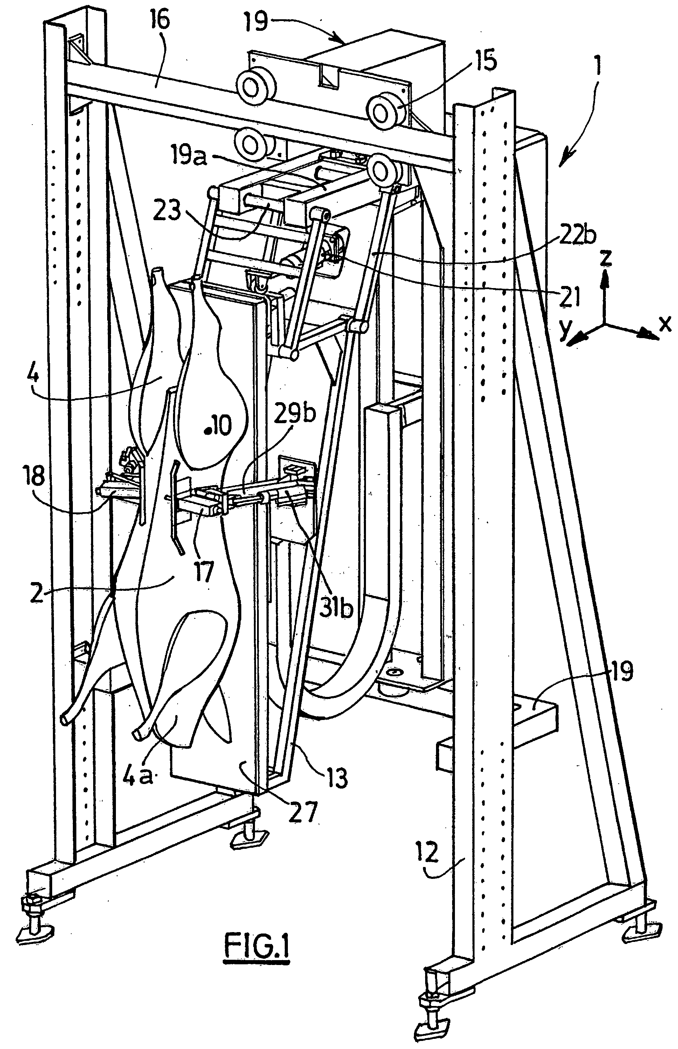

Sur la figure 1 est représentée une installation 1 pour le marquage de carcasses 2 de porcs suspendus par les pattes arrière 4 à un transporteur 3 à défilement continu ou discontinu.

Le transporteur 3 achemine les carcasses 2 selon une direction X longitudinale, tandis que les carcasses 2 suspendues définissent une direction Z d'élévation perpendiculaire à la direction X longitudinale.

Les directions longitudinale X et d'élévation Z, représentées sur la figure 1, forment ensemble un plan dit médian M dans lequel sont déplacées les carcasses 2.

Une direction transversale Y, également représentée sur la figure 1, est perpendiculaire aux directions longitudinale X et d'élévation Z de sorte qu'ensemble ces trois directions X, Y, Z forment un repère orthogonal direct, par rapport auquel est effectuée la présente description.

Les termes « avant », « arrière » sont définis par rapport à la direction Y transversale, tandis que les termes « sur », « sous », « dessus », « dessous », « haut », « bas » sont définis par rapport à la direction Z d'élévation.

Dans la suite de la description, on considère une unique carcasse 2 destinée à subir une opération de marquage au niveau du poste de marquage. La carcasse 2 est considérée comporter deux demi carcasses symétriques 2a, 2b par rapport à un plan de coupe P d'élévation transversale, sensiblement confondu avec le plan de symétrie de la carcasse 2, dans lequel s'étend la colonne vertébrale de cette dernière. La carcasse arrive au niveau du poste de marquage typiquement déjà éviscérée. Selon une variante la carcasse est découpée en deux demi carcasses 2a, 2b, entièrement séparées, ou reliées par un point bas typiquement la tête 4a, la carcasse formant un V dans ce cas. Selon une autre variante la carcasse arrive colonne vertébrale non fendue.

Le transporteur 3 peut être un convoyeur de forme et de construction appropriées, permettant de suspendre la carcasse 2 par exemple par l'intermédiaire de deux crochets ou d'un tinet à deux branches aux extrémités desquelles les pattes arrières de la carcasse 2 sont accrochées.

La carcasse 2 comporte plusieurs zones que l'on souhaite pouvoir marquer, ces zones correspondant à la découpe primaire. Dans le cas général, une carcasse comporte pour chaque demi carcasse cinq zones principales à marquer pour un porc :
- du côté ventral 6 :
   - la poitrine 7 (partie inférieure de l'abdomen et du thorax)
   - l'épaule 8 (ensemble des tissus ayant pour base osseuse l'homoplate, l'humérus, le radius-cubitus
- du côté dorsal 9, et des pattes arrière 4 vers la tête 4a:
   - le jambon 10 (membre postérieur de la carcasse)
   - la longe 11 (partie de la carcasse correspondant à la colonne vertébrale et à l'ensemble des muscles attenants) ; la longe 11 peut comporter deux zones de marquage distinctes, une première zone 11a du côté du jambon, et une deuxième zone 11b (lombe) du côté de la tête 4a.

Si on le souhaite, l'installation 1 décrite peut ne marquer que certaines de ces zones.

L'installation 1 comprend un bâti 12 s'étendant verticalement, de position fixe. Le convoyeur 3 est situé à proximité de la partie extrême supérieure du bâti, et à un espace suffisant pour l'encombrement occupé par les carcasses de porcs et éventuellement de coches traitées sur une même chaîne.

Pour un fonctionnement à poste fixe, le convoyeur 3 est commandé pour que la carcasse 2 puisse être amenée devant le bâti et reste stationnaire pendant l'opération de marquage.

Pour un fonctionnement en poste de marquage mobile, la carcasse 2 est traitée lors de son déplacement ou défilement horizontal selon la direction X.

En outre on peut ne marquer qu'une partie de carcasse 2, par exemple seulement une demi carcasse 2a, 2b.

Le bâti 12 supporte un chassis de support 19 qui supporte lui-même un chariot entrée/sortie 13 qui supporte lui-même un chariot montée/baisse 14 de marquage . Pour une installation à poste mobile, le chassis de support 19 est déplaçable en translation par rapport au bâti 12 selon la direction X, à l'aide de galets 15 montés sur une traverse 16 du bâti 12 et d'un organe moteur 15a. Pour un poste de marquage fixe, le chassis support 19 est fixe.

Le chariot de marquage 14 supporte les deux têtes de marquage 17,18 et est destiné au déplacement vertical de ces têtes 17,18 par rapport au chariot entrée/sortie 13.

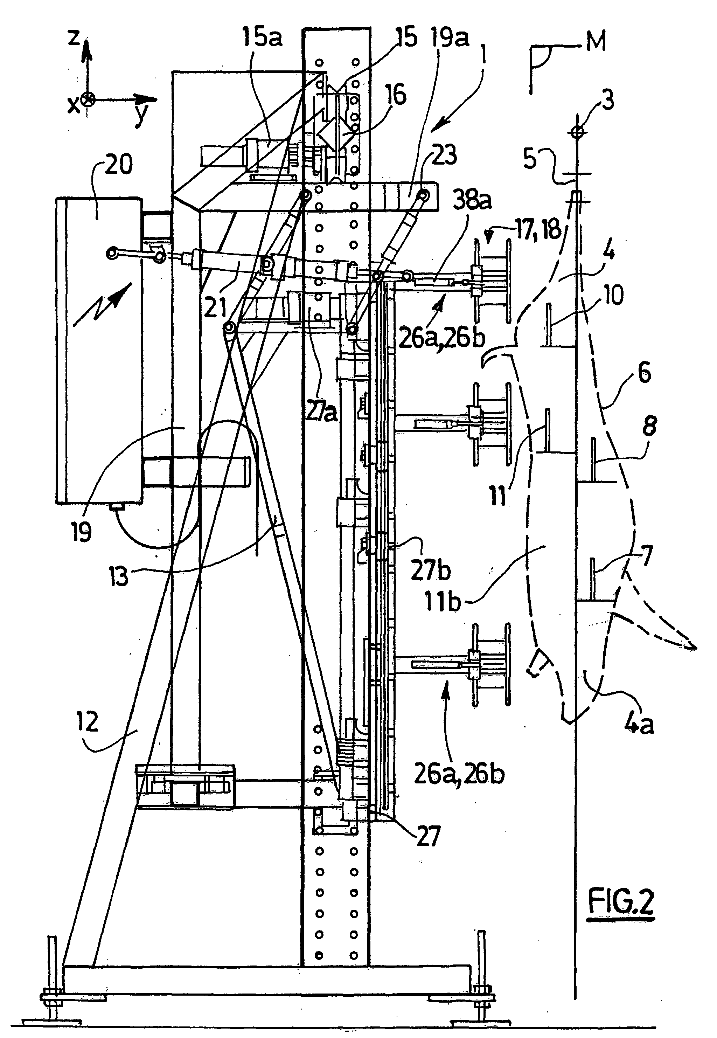

Le chariot entrée/sortie 13 est déplaçable par rapport au bâti 12 à l'aide de moyens d'entraînement appropriés, entre des positions rentrée et sortie, typiquement une position rentrée A et deux positions sortie B et C, illustrées respectivement figures 2, 3, 4. Ces moyens d'entraînement sont destinés à déplacer le chariot entrée/sortie 13, et ainsi également le chariot montée/baisse 14 décrit plus loin, selon la direction générale transversale Y de manière que le chariot 14 puisse s'étendre en dehors du bâti 12. Ces moyens d'entraînement comprennent par exemple un vérin 21, et sont tels que le chariot entrée/sortie 13 puisse se positionner de manière appropriée pour le marquage.

Dans la réalisation considérée, le procédé prévoit un marquage dans deux plans de marquage sensiblement verticaux, désignés premier plan P1 et second plan P2 en s'éloignant du bâti 12 :
- le premier plan P1 de marquage passe pour chaque demi carcasse 2a, 2b par le jambon 10 et la longe 11
- le second plan P2 de marquage passe pour chaque demi carcasse 2a, 2b par l'épaule 7 et la poitrine 8.

Plus précisément, l'on peut considérer de façon suffisamment fiable qu'il existe un plan vertical, le premier plan de marquage P1, passant par une zone de marquage adéquat du jambon 10 et par au moins une zone de marquage adéquat de la longe 11. Il en est de même pour le second plan P2 qui passe par une zone de marquage adéquat de la poitrine 7 et par une zone de marquage adéquat de l'épaule 8. Ceci limite donc la nécessité de réglage du déplacement du chariot dans de nombreuses positions selon la direction Y. Les positions des plans P1 et P2 sont typiquement choisies selon les dimensions des carcasses de la ligne d'abattage.

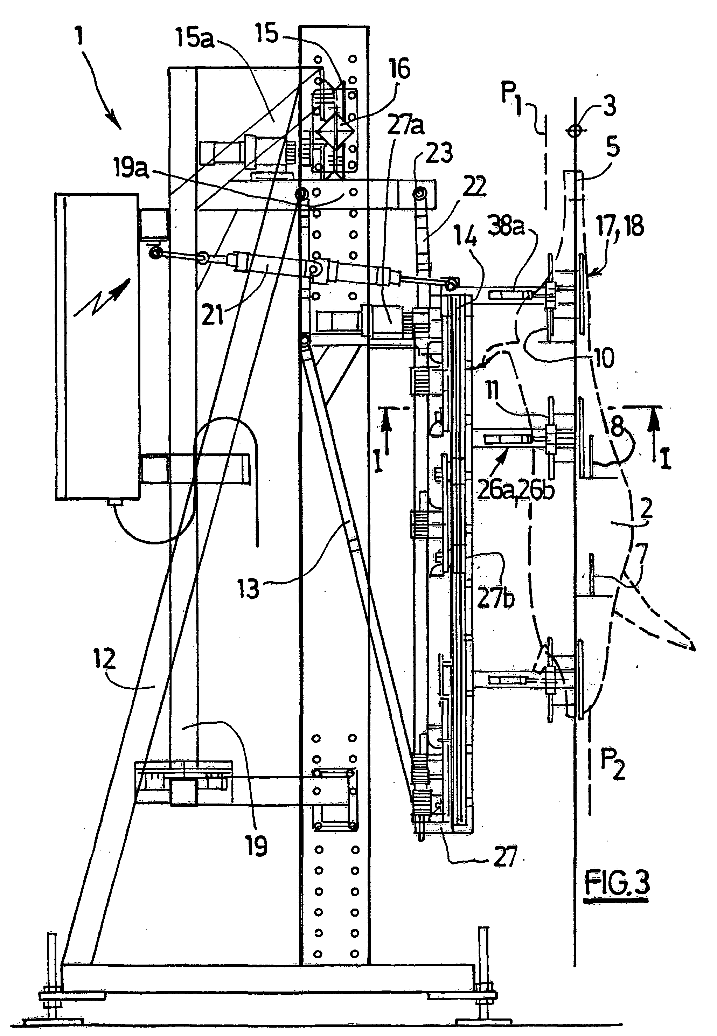

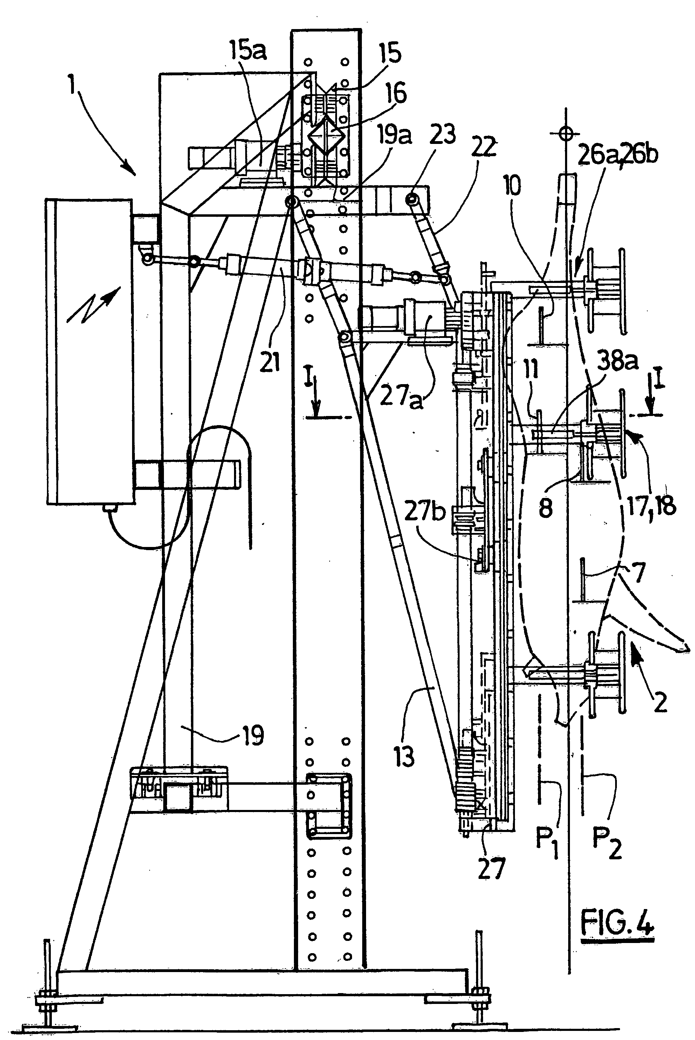

Le chariot entrée/sortie 13, et donc également le chariot montée/baisse 14 monté sur ce chariot entrée/sortie 13, est prévu pour pouvoir se trouver et être maintenu entre trois positions :
- une première position (figure 2), dite d'attente ou écartée en arrière, le chariot montée/baisse 14 étant logé dans le bâti, ce qui permet de dégager le passage pour la carcasse 2 lors de son arrivée ou son évacuation ;
- une deuxième position (figure 3), dite de marquage, dans laquelle le chariot 14 est destiné au marquage dans le premier plan P1, permettant le marquage lorsque les dispositifs de marquage décrits plus loin sont actifs ;
- une troisième position (figure 4), également dite de marquage, dans laquelle le chariot 14 est destiné au marquage dans le second plan P2, permettant le marquage lorsque les dispositifs de marquage décrits plus loin sont actifs .

Un tel fonctionnement selon deux plans de marquage n'est pas pour autant obligatoire. L'installation décrite dans ce mode de réalisation vise une certaine simplicité et des coûts de fabrication limités. On peut envisager une installation et des moyens d'entraînement du chariot plus complexes tels que les têtes de marquage 17,18 puissent être amenées en tout point selon les directions X,Y,Z.

L'intérêt du marquage selon deux plans est qu'il correspond à un marquage fréquemment souhaité par les utilisateurs (épaule, poitrine, jambon, longe) tout en limitant la complexité de l'installation.

En outre on peut bien entend choisir de marquer un nombre variable de zones sur la carcasse dans le premier et le second plan, par exemple uniquement le jambon 10 et l'épaule 7.

On comprend que le chariot montée/baisse 14 peut passer de la position écartée aux positions de marquage de différentes manières possibles, par exemple de façon linéaire en utilisant des glissières supportant le chariot entrée/sortie 13, ou pendulaire comme représenté sur les figures 2 à 4 en utilisant un parallélogramme déformable comprenant deux bielles 22a, 22b articulées sur des axes 23 portés par un cadre 19a du chariot de support 19. Par actionnement du vérin 21, on passe de la position écartée (figure 2) à la première position de marquage (figure 3) puis à la seconde position de marquage (figure 4).

On peut par ailleurs envisager de régler la hauteur du chariot entrée/sortie 13 par une disposition constructive appropriée (glissières, crémaillères, vérins...) comprenant des moyens permettant un coulissement ascendant et descendant du chassis 13. Un tel réglage peut être souhaité pour optimiser le positionnement du chassis 13 par rapport aux carcasses en fonction des dimensions des carcasses et de la nature du système de convoyage et d'accrochage des carcasses. On peut aussi régler la hauteur d'accrochage de la traverse 16 du bâti 12.

Plus généralement, l'installation est telle que le chariot puisse être déplacé tant verticalement vers le haut et/ou le bas , qu'horizontalement dans la direction Y.

Dans la réalisation des figures 2 à 4, le chariot montée/baisse 14 est supporté par le chariot entrée/sortie 13, qui est à déplacement pendulaire, à l'aide d'une tôle de support 27 appartenant à ce chariot entrée/sortie 13. Le chariot montée/baisse 14 comprend un cadre chassis 24 qui supporte deux bras 25a, 25b qui, chacun, portent, et sont prolongés horizontalement dans la direction Y vers le convoyeur 3 et la carcasse 2 à marquer par un dispositif de marquage 26a, 26b respectivement. Il y a ainsi un dispositif de marquage par demi carcasse.

Chaque dispositif 26a,26b est agencé pour pouvoir être déplacé verticalement par rapport au chariot entrée sortie 13 par tout moyen d'entraînement approprié, par exemple un organe moteur 27a avec courroies et galets 27b. Il importe en tout cas de faire en sorte que les dispositifs de marquage 26a, 26b puissent être déplacés de façon relative par rapport à la carcasse 2.

Chaque dispositif de marquage 26a, 26b comprend une tête de marquage 17, 18 respectivement , et des moyens 28 de support et de déplacement de la tête.

Plus précisément concernant les têtes d'impression 17,18, chaque tête utilise typiquement une imprimante jet d'encre. On distingue couramment deux principaux types d'imprimante pour ce marquage :
- « goutte à la demande » : la tête d'impression comporte plusieurs orifices de sortie de l'encre avec une information binaire oui/non pour chaque orifice lors du marquage
- « jet continu dévié » : le jet d'encre passe entre deux plaques présentant une différence de potentiel, la déviation étant réglable .

Chaque tête 17,18 présente une réserve d'encre, et une zone d'impression 17a, 18a représentée schématiquement par une surface plane. On ne détaille pas ici la structure de la tête de marquage 17,18 utilisée par l'homme du métier. L'on peut utiliser différents types de têtes appropriées pour le marquage de carcasses, notamment résistantes aux contraintes de température et d'humidité, et prévues pour la cadence de marquage de l'installation. Dans la réalisation représentée, chaque tête est par ailleurs reliée par des moyens informatiques à un appareil de mesure situé en amont du poste de marquage qui détermine par exemple les dimensions de la carcasse, sa classification, des paramètres d'abattage (date, série ...), de manière à pouvoir marquer les informations carcasses souhaitées.

L'installation décrite permet de réaliser un marquage net des caractères, notamment sans distorsion des informations (taille des caractères, lisibilité...), malgré la fréquence élevée du marquage. Elle permet en effet d'appliquer les têtes de manière appropriée pour que la surface de marquage 17a,18a de la tête d'impression 17,18 soit sensiblement parallèle à la zone de la carcasse à marquer, ce qui revient sensiblement à ce que la buse d'émission de l'encre de marquage soit orientée sensiblement perpendiculaire à la surface à marquer.

Les moyens 28 de support et de déplacement de la tête 17 comprennent dans la réalisation représentée d'une part une barre 29a de support de la tête d'impression 17, et d'autre part deux vérins 30a, 31a de réglage du positionnement de la tête par rapport à la demi-carcasse 2a correspondante, les deux vérins 30a, 31a étant situés de part et d'autre dans un plan horizontal de la barre de support 29a. De même les moyens 28 de support et de déplacement de la tête 18 comprennent dans la réalisation représentée d'une part une barre 29b de support de la tête d'impression 18, et d'autre part deux vérins 30b, 31b de réglage du positionnement de la tête par rapport à la demi-carcasse 2b correspondante, les deux vérins 30b, 31b étant situés de part et d'autre dans un plan horizontal de la barre de support 29b.

Plus précisément, pour le dispositif 26a, la barre 29a de support est montée pivotante dans un plan horizontal (plan X,Y) par rapport au bras 25a du chariot 14 autour d'un premier axe d'articulation 32a. La tête d'impression 17 est montée pivotante dans un plan horizontal par rapport à la barre 29a autour d'un deuxième axe d'articulation 33a. En outre, le premier vérin 30a de réglage est monté pivotant autour de deux axes d'articulation : un troisième axe d'articulation 34a entre la tige 35a du vérin 30a et la barre 29a, et un quatrième axe 36a d'articulation entre le corps du vérin 30a et le bras 25a. De même, pour le dispositif 26b, la barre 29b de support est montée pivotante dans un plan horizontal (plan X,Y) par rapport au bras 25b du chariot 14 autour d'un premier axe d'articulation 32b. La tête d'impression 18 est montée pivotante dans un plan horizontal par rapport à la barre 29b autour d'un deuxième axe d'articulation 33b. En outre, le premier vérin 30b de réglage est monté pivotant autour de deux axes d'articulation : un troisième axe d'articulation 34b entre la tige 35b du vérin 30b et la barre 29b, et un quatrième axe 36a d'articulation entre le corps du vérin 30b et le bras 25b.

Le second vérin 31a, 31b est monté pivotant autour de deux axes d'articulation : un cinquième axe d'articulation 37a, 37b entre le corps de vérin et la barre, et un sixième axe d'articulation 38a,38b entre la tige de vérin et la tête d'impression 17,18.

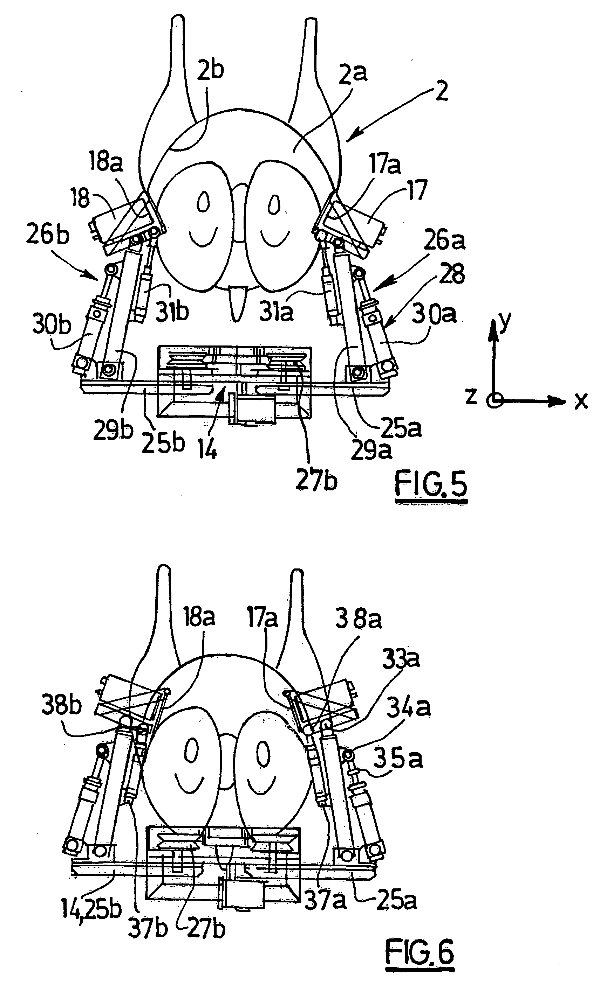

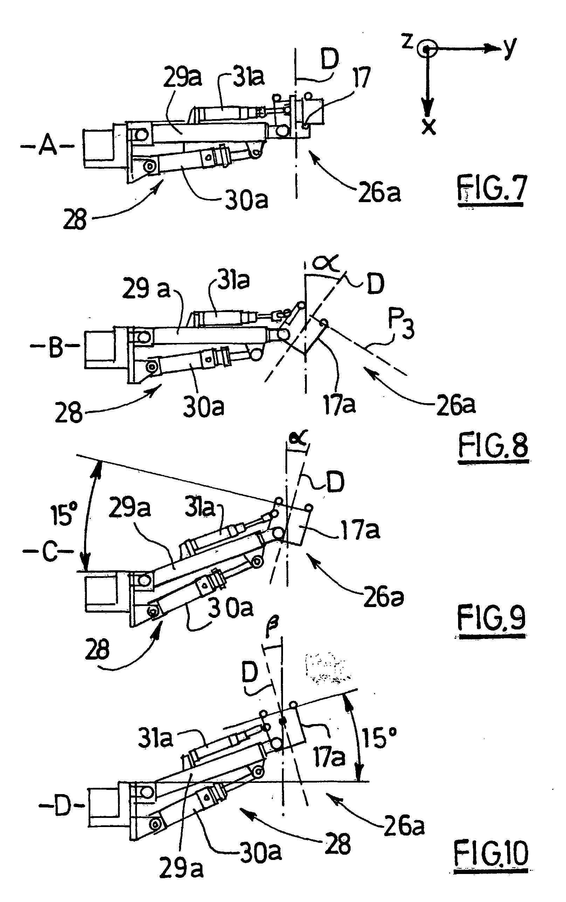

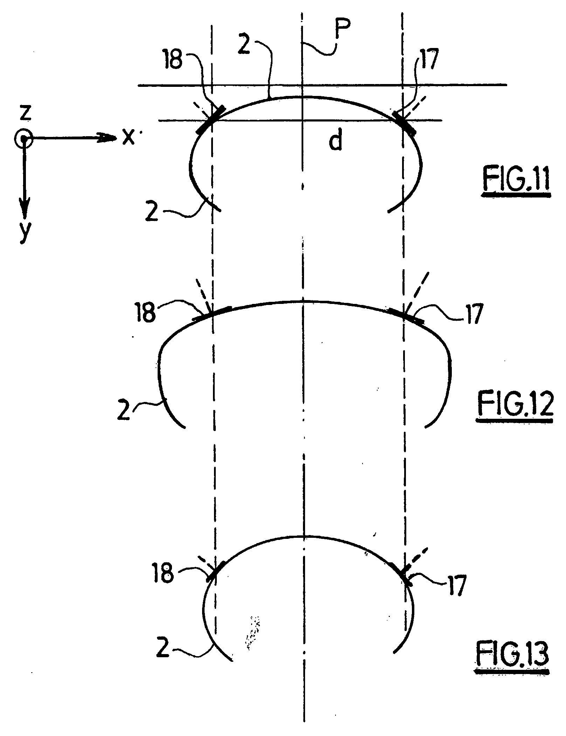

La cinématique d'actionnement des vérins et le réglage de la position de la tête d'impression et de son orientation possible par rapport à la demi carcasse à marquer est illustrée sur les figures 7 à 10 :
- position A (figure 7) dite position de repos : la barre 29a s'étend sensiblement selon la direction Y, les deux vérins 30a,31a sont en position tige courte, le plan de marquage P3 de la tête d'impression est vertical et parallèle au plan Y,Z ;
- position B (figure 8) dite position d'approche la barre 29a s'étend sensiblement selon la direction Y, la tige du premier vérin 30a est en position courte, la tige du second vérin 31a est en position allongée ce qui provoque le pivotement de la tête d'impression 17 dans le plan horizontal du côté opposé au chariot ;
- position C (figures 5 et 9) dite position de marquage proximale : la barre 29a est inclinée par rapport à la direction Y, du côté du second vérin 31a, d'un angle réglable, la tige du premier vérin 30a et la tige du second vérin 31a sont en position longue, l'angle alpha entre la trajectoire D de marquage et la direction X est de l'ordre de 10 à 30° ;
- position D (figures 6 et 10) dite position de marquage distale : la barre 29a est inclinée par rapport à la direction Y, du côté du second vérin 31a, d'un angle réglable, la tige du premier vérin 30a est en position longue, la tige du second vérin 31a est en position courte, ce qui provoque le pivotement de la tête d'impression dans le plan horizontal, l'angle beta entre la trajectoire D de marquage et la direction X est de l'ordre de 10 à 30° .

La position B correspond à un marquage dans le premier plan P1, pour une zone à marquer dont la concavité est tournée vers le chariot 14. La position D correspond au marquage dans le second plan P2, pour une zone à marquer dont la concavité est tournée du côté opposé au chariot 14.

Les deux dispositifs d'entraînement décrits 26a,26b sont disposés symétriquement ou sensiblement symétriquement par rapport au plan transversal vertical. Les moyens d'entraînement de ces dispositifs 26a,26b sont soit communs soit distincts.

Les deux dispositifs 26a,26b sont tels que les têtes de marquage 17,18 sont espacés selon l'axe X d'une distance d suffisante pour être disposés en position appropriée pour le marquage. Compte tenu des différences de conformation des carcasses, en particulier de leur dimension selon l'axe X, cette distance est par exemple pré-réglée et de l'ordre de 360 à 600 mm. En effet une distance constante pourrait causer un marquage non satisfaisant, le dispositif de marquage pouvant venir s'appliquer trop près du plan de symétrie P pour les carcasses de grande taille (figure 12) et trop loin du plan de symétrie P pour les carcasses de petite taille (figure 13), en comparaison avec le marquage souhaité (figure 11).

L'encombrement du dispositif de marquage dans la direction longitudinale X est compris typiquement entre 200 et 600 mm, de manière à ne pas gêner l'introduction des dispositifs de marquage entre les carcasses successives. En effet, les deux parois latérales externes et en regard de deux carcasses successives données sont espacées par exemple de 400mm environ. L'encombrement en particulier selon la direction X de chaque dispositif de marquage est prévu pour qu'il puisse être introduit dans cet espace, en amont et en aval de part et d'autre de la carcasse à marquer.

En outre, les vérins 30a, 31a, 30b, 31b sont réglés de manière à fonctionner comme des ressorts pour suivre la conformation de chaque demi carcasse lors du déplacement vertical de chaque tête dans les plans de marquage P1 et P2. Ainsi, pour chaque demi carcasse, la tête de marquage s'applique de manière appropriée en « suivant » la géométrie de la demi carcasse.

Par ailleurs, l'installation peut prévoir un contrôle de la vitesse de déplacement relatif de la tête de marquage et de ' la zone de marquage, pendant l'impression et entre les impressions. On peut utiliser pour cela un motoréducteur pas à pas repéré 27a, monté sur le chariot entrée/sortie 13.

En outre, l'installation peut comprendre ou non des moyens de maintien de la carcasse lors du marquage du type bras de maintien, et des guides statiques pour tenir les deux demi carcasses en contre appui des bras de maintien. L'installation décrite prévoit un espace suffisant au niveau de la tôle 27 pour comprendre le cas échant de tels moyens de maintien sur le chariot entrée/sortie 13. De plus on peut prévoir que cette tôle 27 soit inclinée au delà de la verticale de quelques degrés de manière à constituer un appui stable pour la carcasse lors du marquage.

Selon une variante on peut envisager une carcasse suspendue autrement par exemple défilant horizontalement en adaptant le marquage en conséquence.

On décrit maintenant plus précisément le procédé de marquage, en se référant aux figures 2 à 4.

On part d'une situation où la carcasse est séparée en deux demi carcasses suspendues, côté dorsal 9 vers le bâti 12. A ce moment le chariot entrée/sortie 13 est en position rétractée de manière à permettre l'amenée de la carcasse 2, les deux dispositifs de marquage 26a, 26b étant écartés l'un de l'autre (figure 2).

Grâce aux moyens prévus à cet effet, le chariot montée/baisse 14 porteur des deux têtes d'impression 17,18 est alors amené pour que les têtes d'impression 17,18 soient en regard de la première zone d'impression souhaitée située dans le plan P1. Dans la réalisation représentée, la première zone est pour chaque tête de marquage la zone référencée 10 (figure 3) correspondant à la zone de marquage souhaitée du jambon et située dans le plan P1. Les têtes d'impression sont à ce stade inactives et en position haute sur le chariot montée/baisse 14. Ce niveau peut être détecté ou calculé à l'aide de moyens à cet effet. L'écartement entre les têtes selon X est préréglé ou ajusté de manière appropriée.

Avant de commencer l'impression, les moyens de commande du positionnement des têtes d'impression, notamment les vérins 30,31, sont actionnés pour que chaque tête soit positionnée de manière appropriée par rapport à la première zone à marquer, telle que représentée en position C - figure 9. L'impression a alors lieu , sensiblement simultanément entre les deux demi carcasses 2a,2b, au niveau de cette première zone 10. Puis, une fois le marquage de cette première zone 10 terminé, les deux têtes d'impression cessent l'impression et, le chariot entrée/sortie 13 étant fixe selon la direction verticale Y, le chariot montée/baisse 14 et donc les bras de support 25a,25b des têtes d'impression se déplacent vers le bas par rapport au chariot entrée/sortie 13, jusqu'à la zone de marquage suivante, en l'occurrence la longe référencée 11.

Une fois le marquage de la longe 11 terminé, en une ou éventuellement deux zones 11a,11b, le chariot entrée/sortie 13 à déplacement pendulaire est déplacé de manière à se retrouver en deuxième position de marquage, c'est à dire les deux têtes de marquage 17,18 dans le plan P2. Pour éviter un aller-retour vertical des têtes, le marquage dans P2 commence par le bas, c'est à dire par l'épaule 7 pour chaque demi carcasse. Une fois le marquage de chaque épaule 7 terminé, simultanément entre les deux têtes 17,18, les têtes 17,18 sont déplacées (sans marquage) selon la direction Z jusqu'à la poitrine dans la zone 8 approprié. Le marquage a alors lieu au niveau de cette zone 8. Selon d'autres réalisations le marquage peut être effectué de bas en haut (ou de haut en bas) dans les plans P1 et P2.

Le marquage de la carcasse étant terminé, le chariot 13 revient en position écartée (figure 2), la carcasse est évacuée et un nouveau cycle de marquage commence.

Dans la réalisation représentée, la distance entre les plans P1 et P2 est de 160 mm environ, la course de sortie du chariot entrée/sortie 13 est de 400mm dont 240 mm pour P1 et 160 mm pour P2.

Le temps de marquage des cinq zones à marquer, comprenant le cycle de déplacement des chariots 13,14 en plus de celui des têtes 17,18, doit être en tout cas suffisamment faible pour satisfaire la cadence souhaitée, par exemple être de l'ordre de quelques secondes.

L'installation représentée étant du type à poste mobile, le déplacement décrit des têtes selon Z s'accompagne du déplacement selon X et Y.

Pour le marquage dans P1, comme la paroi externe des demi carcasses est incurvée concavité vers le bâti 12, les vérins de commande du positionnement des têtes sont actionnés de manière que ces têtes soient en position appropriées pour le marquage, c'est à dire selon la position des figures 5 et 9.

Pour le marquage dans P2, comme la paroi externe des demi carcasses est incurvée concavité du côté opposé au bâti 12, les vérins de commande du positionnement des têtes sont actionnés de manière que ces têtes soient en position appropriées pour le marquage, c'est à dire selon la position des figures 6 et 10.

Dans une réalisation la distance d1 entre le plan passant par le haut du jambon (point la plus haut du marquage) et le bas de l'épaule (point le plus bas du marquage) est de 1060 mm.

Dans le mode de réalisation représenté figures 3,4, le marquage est effectué, pour chaque zone de marquage, selon la direction verticale Z, le long de la carcasse. On pourrait également prévoir une réalisation avec une structure de chariot différente prévoyant un marquage selon une direction horizontale, c'est à dire transversalement à la carcasse.

En outre, on peut aussi envisager un marquage avec une carcasse dont la face ventrale est tournée vers le bâti au lieu de la face dorsale en adoptant une disposition constructive appropriée.

## Revendications

1. Installation (1) pour marquer au moins une partie de la carcasse (2) d'un animal abattu comprenant des moyens pour convoyer (3) les carcasses successives vers un poste de marquage, ledit poste de marquage comprenant pour chaque demi carcasse (2a, 2b) une tête unique de marquage (17,18) supportée par des moyens (14) permettant de déplacer ladite tête de marquage (17,18) selon une direction verticale (Z), selon une direction horizontale de défilement (X) des carcasses et selon une direction horizontale (Y) transversale à la direction de défilement, de manière que ladite tête puisse atteindre les différentes zones (7,8,10,11) à marquer sur la demi carcasse **caractérisé en ce que** chaque tête de marquage (17,18), affectée à une demi carcasse (2a,2b), est supportée par un chariot montée/baisse (14) porté lui-même par un chariot entrée/sortie (13) monté lui même sur un chassis support (19) monté lui-même sur un bâti fixe (12), l'installation comprenant des moyens d'entraînement (15a,21,27a) du chassis support (19), du chariot entrée/sortie (13), du chariot montée/baisse (14), et des moyens de support et de convoyage (5)- plus spécialement de suspension verticale - de la carcasse à marquer, les moyens d'entraînement étant tels que chaque tête de marquage passe d'une position d'attente dite écartée, à au moins une position de marquage dite rapprochée.

2. Installation selon la revendication 1, **caractérisée en ce que** chaque tête de marquage (17,18) fait partie d'un dispositif de marquage (26a,26b) monté sur le chariot montée/baisse (14), et mobile verticalement par rapport au chariot entrée/sortie (13) de manière à pouvoir marquer plusieurs zones successives de la carcasse espacées situées sensiblement dans un même plan.

3. Installation selon la revendication 2, **caractérisée en ce qu'**elle comprend des moyens (21) pour amener chaque tête de marquage, dans un premier plan (P1) sensiblement vertical de marquage passant par la longe (11) et le jambon (10), et un deuxième plan (P2) sensiblement vertical de marquage passant par l'épaule (7) et la poitrine (8).

4. Installation selon la revendication 3, **caractérisée en ce que** chaque dispositif de marquage (26a,26b) est agencé pour pouvoir se déplacer selon une course respectivement descendante dans le premier plan (P1) puis ascendante dans le second plan (P2).

5. Installation selon l'une quelconque des revendications 2 à 4, **caractérisée en ce que** chaque dispositif de marquage comprend des moyens de commande (28) du positionnement, plus spécialement de pivotement, de la tête (17,18), de manière que la zone de marquage (17a, 18a) de ladite tête (17,18) s'applique, sans distorsion du marquage, en regard de la surface de la carcasse dans la zone à marquer (7,8,10,11).

6. Installation selon la revendication 5, **caractérisée en ce que** les moyens de commande comprennent deux vérins (30a, 30b, 31a, 31b) actionnant le pivotement de la tête dont un (31a,31b) est relié à la tête (17,18), tels que la tête de marquage soit orientée de façon appropriée contre la surface de la carcasse, dans une première position du côté dorsal, et dans une seconde position du côté ventral.

7. Installation selon la revendication 6, **caractérisée en ce que** les vérins sont adaptés pour agir comme un ressort lors du déplacement vertical des têtes de marquage par rapport à la carcasse, de manière à exercer un effort suffisamment élevé pour appliquer les têtes, et suffisamment faible pour suivre la conformation de la carcasse.

8. Installation selon l'une quelconque des revendications 2 à 7, **caractérisée en ce que** l'encombrement du dispositif de marquage (26a,26b) dans la direction longitudinale de défilement est compris entre 200 et 600 mm.

9. Installation selon l'une quelconque des revendications 1 à 8, caractérisée en ce quelle comprend des moyens de contrôle de la vitesse de déplacement relatif de la tête de marquage et de la zone de marquage entre les impressions, en particulier un moteur pas à pas avec roue codeuse, ainsi que pendant l'impression.

10. Installation selon l'une des revendications 1 à 9, **caractérisée en ce qu'**elle est soit à poste mobile soit à poste fixe.

11. Installation selon l'une des revendications 1 à 10, **caractérisée en ce que** les deux têtes sont écartées d'une distance préréglée ou réglable à l'aide de moyens de réglage de l'écartement dans un même plan horizontal et disposées sensiblement symétriquement l'une par rapport à l'autre par rapport à un plan vertical transversal de symétrie de la carcasse.

12. Installation selon l'une des revendications 1 à 11, **caractérisée en ce qu'**elle comprend en amont du poste de marquage des moyens de mesure d'informations carcasse, spécifiques de la carcasse, du type numéro d'identification de la carcasse, date de l'abattage, poids, rapport gras/maigre, et des moyens de liaison informatiques entre les moyens de mesure et les têtes de marquage imprimant ces informations carcasse.

13. Installation selon l'une des revendications 1 à 12, **caractérisée en ce qu'**elle comprend des moyens de programmation des positions de marquage en fonction des dimensions - notamment la longueur - de la carcasse mesurées en amont du poste de marquage.

14. Installation selon l'une des revendications 1 à 13, **caractérisée en ce que** le chariot entrée/sortie (13) comprend un plan libre de protection (27). de la face dorsale de la carcasse, pouvant être incliné au delà de la verticale de quelques degrés de manière à constituer un appui stable pour la carcasse lors du marquage, le chariot entrée/sortie ménageant en outre un espace suffisant pour comprendre le cas échéant des moyens de maintien de la carcasse lors du marquage, et des guides statiques pour tenir les deux demi carcasses en contre appui des bras de maintien.

15. Installation selon l'une quelconque des revendications 1 à 14, **caractérisée en ce que** le marquage est prévu en tout point de la ligne d'abattage, lorsque l'abattoir prévoit une traçabilité complète, ou à proximité du poste de pesée fiscale lorsque le marquage est destiné essentiellement à imprimer un paramètre gras/maigre propre à chaque carcasse.

16. Installation selon l'une quelconque des revendications 2 à 15, **caractérisée en ce que** l'espace libre en position écartée est suffisant pour permettre le marquage de porcs et de coches sur un même poste.

17. Procédé de marquage de carcasses (2) d'animaux de boucherie dans une installation selon l'une des revendications 1 à 16, dans lequel on achemine les carcasses successives (2) jusqu'au poste de marquage disposé latéralement par rapport à la direction de défilement des carcasses, caractérisé en qu'il comprend les étapes suivantes pour chaque demi carcasse à marquer :
- On amène la tête de marquage (17,18) au niveau d'une première zone de marquage, et on l'applique de manière appropriée contre cette zone ;
- On actionne la tête de marquage en vue d'imprimer les informations souhaitées
- On réalise un déplacement relatif de la tête de marquage par rapport à la demi carcasse successivement d'une position de marquage à une autre, de manière à marquer la demi carcasse aux différentes positions souhaitées.

18. Procédé de marquage selon la revendication 17 **caractérisé en ce que** l'on procède au marquage successivement dans un premier plan (P1) vertical de marquage passant part le jambon (10), la longe (11), puis par déplacement du chariot entrée/sortie (13) de support des têtes d'impression, dans un second plan (P2) vertical de marquage passant par la poitrine (7) et l'épaule (8).

19. Procédé de marquage selon la revendication 17 ou 18 **caractérisé en ce que** l'on enregistre des informations carcasse spécifiques de la carcasse à marquer et les dimensions - notamment la longueur - de la carcasse préalablement au poste de marquage, puis on les transmet aux têtes de marquage pour le marquage de la carcasse correspondante.

20. Procédé de marquage selon l'une quelconque des revendications 17 à 19 **caractérisé en ce que** l'on commande le marquage dans chaque zone de marquage lorsque la tête de marquage est appliquée de façon appropriée contre la surface de la carcasse dans la zone à marquer.

## Patentansprüche

1. Anlage (1) zur Markierung zumindest eines Teils des Gerippes (2) eines geschlachteten Tieres, mit Beförderungsmitteln (3) der aufeinander folgenden Gerippe zu einem Markierungsposten, wobei der besagte Markierungsposten für jedes Halbgerippe (2a, 2b) einen einzigen Markierungskopf (17, 18) aufweist, der von Mitteln (14) getragen wird, mit denen der besagte Markierungskopf (17, 18) nach einer vertikalen Richtung (Z), nach einer horizontalen Vorbeilaufrichtung (X) der Gerippe und nach einer horizontalen, quer zur Vorbeilaufrichtung verlaufenden Richtung (Y) bewegt werden kann, so dass der besagte Kopf die verschiedenen, auf dem Halbgerippe zu markierenden Bereiche (7, 8, 10, 11) erreichen kann, **dadurch gekennzeichnet, dass** jeder einem Halbgerippe (2a, 2b) zugeordnete Markierungskopf (17, 18) von einem Hub/Senkschlitten (14) getragen wird, der wiederum von einem Ein-/Ausfahrschlitten (13) getragen wird, der wiederum auf einem Tragrahmen (19) montiert ist, der seinerseits auf einem festen Gestell (12) montiert ist, wobei die Anlage Antriebsmittel (15a, 21, 27a) des Tragrahmens (19), des Ein/Ausfahrschlittens (13), des Hub-/Senkschlittens (14) und - insbesondere vertikal hängende - Trag- und Beförderungsmittel (5) des zu markierenden Gerippes umfasst, wobei die Antriebsmittel so beschaffen sind, dass jeder Niarkierungskopf aus einer so genannten entfernten Warteposition in mindestens eine so genannte angenäherte Markierungsposition fährt.

2. Anlage nach Anspruch 1, **dadurch gekennzeichnet, dass** jeder Markierungskopf (17, 18) Bestandteil einer Markierungsvorrichtung (26a, 26b) ist, die auf den Hub/Senkschlitten (14) montiert und in Bezug auf den Ein/Ausfahrschlitten (13) vertikal verfahrbar ist, so dass mehrere aufeinander folgende beabstandete etwa auf einer gleichen Ebene liegende Bereiche des Gerippes markiert werden können.

3. Anlage nach Anspruch 2, **dadurch gekennzeichnet, dass** sie Mittel (21) umfasst, um jeden Markierungskopf in eine erste, etwa vertikale, durch die Lende (11) und den Schinken (10) verlaufende Markierungsebene (P1) und in eine zweite, etwa vertikale, durch die Schulter (7) und die Brust (8) verlaufende Markierungsebene (P2) zu verfahren.

4. Anlage nach Anspruch 3, **dadurch gekennzeichnet, dass** jede Markierungsvorrichtung (26a, 26b) so angeordnet ist, dass sie sich jeweils nach einem in der ersten Ebene (P1) abfallenden und dann nach einem in der zweiten Ebene (P2) ansteigenden Weg bewegen kann.

5. Anlage nach einem der Ansprüche 2 bis 4, **dadurch gekennzeichnet, dass** jede Markierungsvorrichtung Steuermittel (28) für die Positionierung, insbesondere zum Verschwenken des Kopfes (17, 18) umfasst, so dass sich der Markierungsbereich (17a, 18a) des besagten Kopfes (17, 18), ohne die Markierung zu verzerren, gegenüber der Fläche des Gerippes in dem zu markierenden Bereich (7, 8, 10, 11) anlegt.

6. Anlage nach Anspruch 5, **dadurch gekennzeichnet, dass** die Steuermittel zwei Zylinder (30a, 30b, 31a, 31b) umfassen, die das Verschwenken des Kopfes bewirken, wovon einer (31a, 31b) mit dem Kopf (17, 18) verbunden ist, so dass der Markierungskopf in geeigneter Weise gegen die Fläche des Gerippes gerichtet ist, in einer ersten Position auf der Rückenseite und in einer zweiten Position auf der Bauchseite.

7. Anlage nach Anspruch 6, **dadurch gekennzeichnet, dass** die Zylinder geeignet sind, um beim in Bezug auf das Gerippe vertikalen Verfahren der Markierungsköpfe als Feder zu wirken, um eine genügend hohe Kraft auszuüben, um die Köpfe aufzudrücken, und eine genügend schwache Kraft, um der Ausbildung des Gerippes zu folgen.

8. Anlage nach einem der Ansprüche 2 bis 7, **dadurch gekennzeichnet, dass** die Abmessungen der Markierungsvorrichtung (26a, 26b) in der Längsvorbeilaufrichtung zwischen 200 und 600 mm betragen.

9. Anlage nach einem der Ansprüche 1 bis 8, **dadurch gekennzeichnet, dass** sie Kontrollmittel der Verfahrgeschwindigkeit in Bezug auf den Markierungskopf und den Markierungsbereich zwischen den Aufdrucken umfasst, insbesondere einen Schrittmotor mit Codierrad, sowie während des Aufdruckens.

10. Anlage nach einem der Ansprüche 1 bis 9, **dadurch gekennzeichnet, dass** sie entweder einen mobilen oder einen festen Posten aufweist.

11. Anlage nach einem der Ansprüche 1 bis 10, **dadurch gekennzeichnet, dass** die beiden Köpfe in einem Abstand angeordnet sind, der anhand von Einstellmitteln des Abstandes voreinstellbar oder einstellbar ist, die in einer gleichen horizontalen Ebene und etwa symmetrisch zueinander in Bezug auf eine vertikale quere Symmetrieebene des Gerippes angeordnet sind.

12. Anlage nach einem der Ansprüche 1 bis 11, **dadurch gekennzeichnet, dass** sie vor dem Markierungsposten Messmittel von Gerippe spezifischen Informationen umfasst, des Typs Identifikationsnummer des Gerippes, Schlachtdatum, Gewicht, Verhältnis fett/mager, und informationstechnische Verbindungsmittel zwischen den Messmitteln und den Markierungsköpfen, die diese Gerippeinformationen ausdrucken.

13. Anlage nach einem der Ansprüche 1 bis 12, **dadurch gekennzeichnet, dass** sie Programmiermittel der Markierungspositionen je nach Größe - insbesondere Länge - des Gerippes umfasst, die vor dem Markierungsposten gemessen werden.

14. Anlage nach einem der Ansprüche 1 bis 13, **dadurch gekennzeichnet, dass** der Ein-/Ausfahrschlitten (13) eine freie Schutzfläche (27) der Rückenseite des Gerippes umfasst, die um einige Grad über die Vertikale hinaus schräg gestellt werden kann, um für das Gerippe während des Markierens eine feste Stütze zu bilden, wobei der Ein/Ausfahrschlitten ferner einen ausreichenden Raum aufweist, um gegebenenfalls Festhaltmittel des Gerippes während des Markierens aufzunehmen, sowie statische Führungen, um die beiden Halbgerippe gegen Haltearme gedrückt zu halten.

15. Anlage nach einem der Ansprüche 1 bis 14, **dadurch gekennzeichnet, dass** die Markierung an jeder Stelle der Schlachtstrasse vorgesehen ist, wenn der Schlachthof eine komplette Rückverfolgbarkeit vorsieht, oder in der Nähe des amtlichen Wiegepostens, wenn die Markierung im Wesentlichen dazu dient, einen Parameter fett/mager für jedes Gerippe zu drucken.

16. Anlage nach einem der Ansprüche 2 bis 15, **dadurch gekennzeichnet, dass** der Freiraum in entfernter Position groß genug ist, um die Markierung von Schweinen und Säuen an einem selben Posten zu ermöglichen.

17. Markierungsverfahren von Schlachttiergerippen (2) in einer Anlage nach einem der Ansprüche 1 bis 16, bei dem man die aufeinander folgenden Gerippe (2) bis zum Markierungsposten befördert, der in Bezug auf die Vorbeilaufrichtung der Gerippe seitlich angeordnet ist, **dadurch gekennzeichnet, dass** es für jedes zu markierende Halbgerippe die folgenden Schritte umfasst:
- man fährt den Markierungskopf (17, 18) in einen ersten Markierungsbereich und drückt ihn in geeigneter Weise gegen diesen Bereich;
- man betätigt den Markierungskopf, um die gewünschten Informationen aufzudrucken;
- man führt eine Relativbewegung des Markierungskopfes in Bezug auf das Halbgerippe nacheinander aus einer Markierungsposition in eine andere durch, um das Halbgrippe an den verschiedenen gewünschten Positionen zu markieren.

18. Markierungsverfahren nach Anspruch 17, **dadurch gekennzeichnet, dass** man die Markierungen nacheinander in einer ersten, durch den Schinken (10) und die Lende (11) verlaufenden vertikalen Markierungsebene (P1) vornimmt, und dann, durch Verfahren des Ein-/Ausfahrschlittens, (13) des Druckkopfträgers, in einer zweiten, durch die Brust (7) und die Schulter (8) verlaufenden vertikalen Markierungsebene (P2).

19. Markierungsverfahren nach Anspruch 17 oder 18, **dadurch gekennzeichnet, dass** man zuvor spezifische Informationen des zu markierenden Gerippes und die Größe - insbesondere die Länge - des Gerippes am Markierungsposten aufzeichnet und sie dann zur Markierung des entsprechenden Gerippes an die Markierungsköpfe überträgt.

20. Markierungsverfahren nach einem der Ansprüche 17 bis 19, **dadurch gekennzeichnet, dass** man die Markierung in jedem Markierungsbereich auslöst, wenn der Markierungskopf in geeigneter Weise gegen die Fläche des Gerippes in dem zu markierenden Bereich anliegt.

## Claims

1. Installation (1) for marking at least part of the carcass (2) of a slaughtered animal, comprising means for conveying (3) the successive carcasses to a marking station, said marking station comprising, for each half-carcass (2a, 2b), a single marking head (17, 18) supported by means (14) that allow said marking head (17, 18) to be moved in a vertical direction (Z), in a horizontal carcass travel direction (X) and in a horizontal direction (Y) that is transverse to the travel direction, such that said head can reach the various zones (7, 8, 10, 11) that are to be marked on the half-carcass, **characterized in that** each marking head (17, 18), which is assigned to a half-carcass (2a, 2b), is supported by a raising/lowering carriage (14) that is itself borne by an in/out carriage (13) that is itself mounted on a support chassis (19) that is itself mounted on a fixed frame (12), the installation comprising drive means (15a, 21, 27a) for driving the support chassis (19), the in/out carriage (13) and the raising/lowering carriage (14), and means for supporting and conveying (5) - more especially for the vertical suspension of - the carcass that is to be marked, the drive means being such that each marking head passes from a waiting position, referred to as the remote position, to at least one marking position, referred to as the close position.

2. Installation according to Claim 1, **characterized in that** each marking head (17, 18) forms part of a marking device (26a, 26b) that is mounted on the raising/lowering carriage (14) and can move vertically with respect to the in/out carriage (13) such that it can mark several successive zones of the carcass that are spaced apart and are located substantially in a same plane.

3. Installation according to Claim 2, **characterized in that** it comprises means (21) for bringing each marking head into a first essentially vertical marking plane (P1) that passes through the loin (11) and the ham (10), and a second essentially vertical marking plane (P2) that passes through the shoulder (7) and the belly (8).

4. Installation according to Claim 3, **characterized in that** each marking device (26a, 26b) is arranged so as to be able to move with a movement that is respectively a downward movement in the first plane (P1) and then an upward movement in the second plane (P2).

5. Installation according to any one of Claims 2 to 4, **characterized in that** each marking device comprises control means (28) for controlling the positioning, more especially the pivoting, of the head (17, 18) such that the marking zone (17a, 18a) of said head (17, 18) is applied, without distortion of the marking, facing the surface of the carcass in the zone that is to be marked (7, 8, 10, 11).

6. Installation according to Claim 5, **characterized in that** the control means comprise two rams (30a, 30b, 31a, 31b) that actuate the pivoting of the head, one (31a, 31b) of which is connected to the head (17, 18), such that the marking head is oriented in a suitable manner against the surface of the carcass, in a first position on the dorsal side and in a second position on the ventral side.

7. Installation according to Claim 6, **characterized in that** the rams are adapted to act as a spring during the vertical displacement of the marking heads with respect to the carcass, so as to exert a force that is strong enough to apply the heads and weak enough to follow the shape of the carcass.

8. Installation according to any one of Claims 2 to 7, **characterized in that** the size of the marking device (26a, 26b) in the longitudinal direction of travel is between 200 and 600 mm.

9. Installation according to any one of Claims 1 to 8, **characterized in that** it comprises means for controlling the rate of relative displacement of the marking head and of the marking zone between the printing operations, in particular a stepping motor with coding wheel, as well as during the printing operation.

10. Installation according to one of Claims 1 to 9, **characterized in that** it has either a movable station or a fixed station.

11. Installation according to one of Claims 1 to 10, **characterized in that** the two heads are spaced apart by a distance that is preset or that can be set with the aid of means for setting the spacing in the same horizontal plane, and are arranged essentially symmetrically in relation to one another with respect to a transverse vertical plane of symmetry of the carcass.

12. Installation according to one of Claims 1 to 11, **characterized in that** it comprises, upstream of the marking station, means for measuring carcass information, which is specific to the carcass, of the type identification number of the carcass, date of slaughter, weight, fat/lean ratio, and means for computerized connection between the measurement means and the marking heads that print this carcass information.

13. Installation according to one of Claims 1 to 12, **characterized in that** it comprises means for programming the marking positions as a function of the dimensions - in particular the length - of the carcass that are measured upstream of the marking station.

14. Installation according to one of Claims 1 to 13, **characterized in that** the in/out carriage (13) comprises a free plane (27) for protecting the dorsal face of the carcass, which plane can be inclined beyond the vertical by a few degrees so as to constitute a stable bearing for the carcass during marking, the in/out carriage moreover providing sufficient space to comprise, where necessary, means for holding the carcass during marking, and static guides for keeping the two half-carcasses against the holding arms.

15. Installation according to any one of Claims 1 to 14, **characterized in that** the marking is provided at any point of the slaughter line, when the abattoir has complete traceability, or in the vicinity of the fiscal weighing station when the marking is intended essentially to print a fat/lean parameter that is specific to each carcass.

16. Installation according to any one of Claims 2 to 15, **characterized in that** the free space in the remote position is enough to allow the marking of boars and sows at the same station.

17. Method of marking carcasses (2) of slaughtered animals in an installation according to one of Claims 1 to 16, in which the successive carcasses (2) are brought to the marking station placed sideways with respect to the direction of travel of the carcasses, **characterized in that** it comprises the following steps for each half-carcass that is to be marked:
- the marking head (17, 18) is brought to a first marking zone, and is applied in a suitable manner against this zone;
- the marking head is actuated for the purpose of printing the desired information;
- the marking head is moved relatively with respect to the half-carcass successively from one marking position to another, so as to mark the half-carcass at the various desired positions.

18. Marking method according to Claim 17, **characterized in that** the marking is carried out successively in a first vertical marking plane (P1) passing through the ham (10) and the loin (11), and then, by moving the in/out carriage (13) that supports the printing heads, in a second vertical marking plane (P2) passing through the belly (7) and the shoulder (8).

19. Marking method according to Claim 17 or 18, **characterized in that** carcass information that is specific to the carcass to be marked, and also the dimensions - in particular the length - of the carcass, are recorded prior to the marking station, and then these are transmitted to the marking heads for the marking of the corresponding carcass.

20. Marking method according to any one of Claims 17 to 19, **characterized in that** the marking in each marking zone is commanded when the marking head is applied in a suitable manner against the surface of the carcass in the zone that is to be marked.
